# FASCICULE DE BREVET EUROPEEN

(11) **EP 1 020 977 B1**
(45) Date de publication et mention de la délivrance du brevet: **07.06.2006**
(21) Numéro de dépôt: 00810026.5
(22) Date de dépôt: 11.01.2000
(51) Int. Cl.: H02K 15/02, H02K 1/18

(54) **Procédé d'assemblage d'un moteur électrique rotatif**
Verfahren zum Zusammenbau eines rotierenden Elektromotors
Method of assembling a rotary electric motor

(30) Priorité: 14.01.1999 CH 6199
(43) Date de publication de la demande: 19.07.2000
(73) Titulaire: Api Portescap, 2301 La Chaux-De-Fonds (CH)
(72) Inventeur: Laoun, Magdi, 2300 La Chaux-de-Fonds (CH)
(74) Mandataire: Reuteler, Raymond Werner

(56) Documents cités:
- FR-A- 962 064
- FR-A- 1 314 822
- GB-A- 2 059 177
- US-A- 2 304 607

## Description

La présente invention concerne un procédé d'assemblage d'un moteur électrique rotatif, plus particulièrement d'une partie statorique d'un tel moteur, cette partie statorique comprenant une partie de manteau allongée entourant un empilement de pièces de tôle magnétiquement perméables, de forme générale annulaire, disposées perpendiculièrement au sens de la longueur de ladite partie de manteau (voir G-B-A-2 059 177).

Des moteurs de ce type existent par exemple sous forme de moteurs à courant continu, à commutation électronique, utilisant un rotor aimanté cylindrique.

L'invention a notamment pour but de fournir un procédé d'assemblage permettant de faciliter et de rendre plus économique la fabrication des moteurs visés, tout en leur assurant un haut degré de fiabilité.

A cet effet, le procédé d'assemblage selon l'invention est caractérisé par les étapes spécifiées dans la revendication 1. Des formes d'exécution particulières de ce procédé sont décrites dans les revendications 2 à 5.

L'invention a également pour objet un moteur obtenu par l'utilisation du procédé selon l'invention, tel que décrit dans la revendication 6.

Les particularités, buts et avantages de la présente invention ressortiront plus particulièrement de la description donnée ci-après d'un exemple de réalisation illustré dans le dessin annexé, dans lequel
la Fig. 1 est une vue en coupe axiale d'un moteur rotatif à courant continu assemblé en utilisant le procédé selon l'invention, et
la Fig. 2 est une vue, partiellement en coupe, d'un outil pour l'assemblage d'une partie du stator du moteur de la Fig. 1.

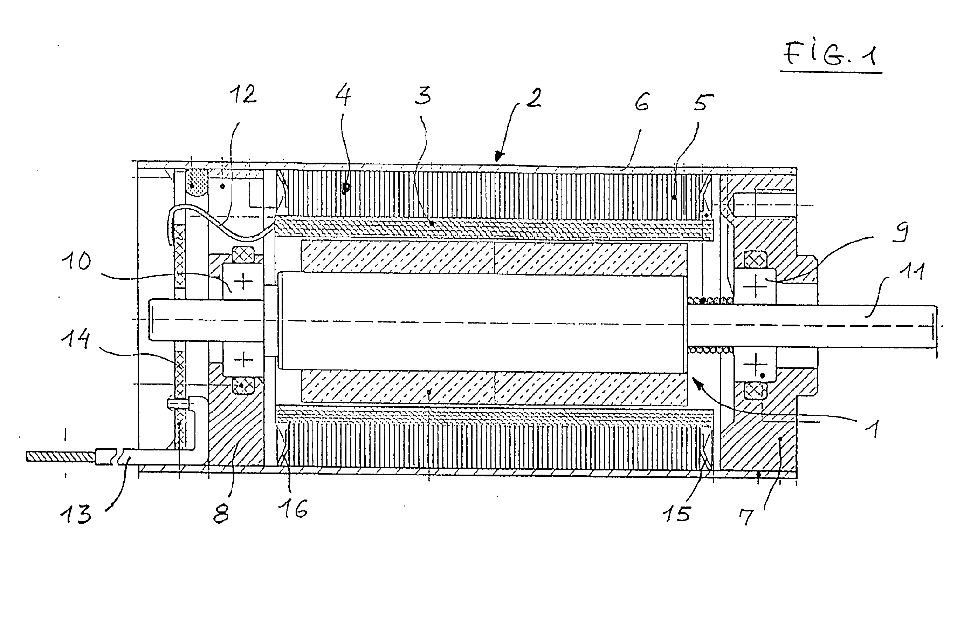

Le moteur montré à titre d'exemple à la Fig. 1 utilise un rotor aimanté 1 disposé dans un ensemble statorique 2, comportant une bobine d'excitation électrique 3 et un circuit magnétique 4 qui assure la fermeture du champ. Le circuit magnétique 4 est constitué par un empilement de tôles 5, par exemple en fer-silicium ou en fer-nickel, ces tôles étant essentiellement annulaires, mais pouvant comporter des dents pour former des pôles saillants.

Les tôles 5 sont ajustées dans un tube 6 qui constitue la paroi latérale extérieure du moteur. Des flasques avant 7 et arrière 8 sont chassés dans le tube 6 et supportent des paliers 9, 10 dans lesquels est logé l'arbre 11 du rotor. La bobine 3 est fixée à l'intérieur des tôles 5, par exemple par collage, et est connectée à un circuit de commande par l'intermédiaire de câbles 12, 13 via une plaque de connexion 14 disposée dans le tube 6.

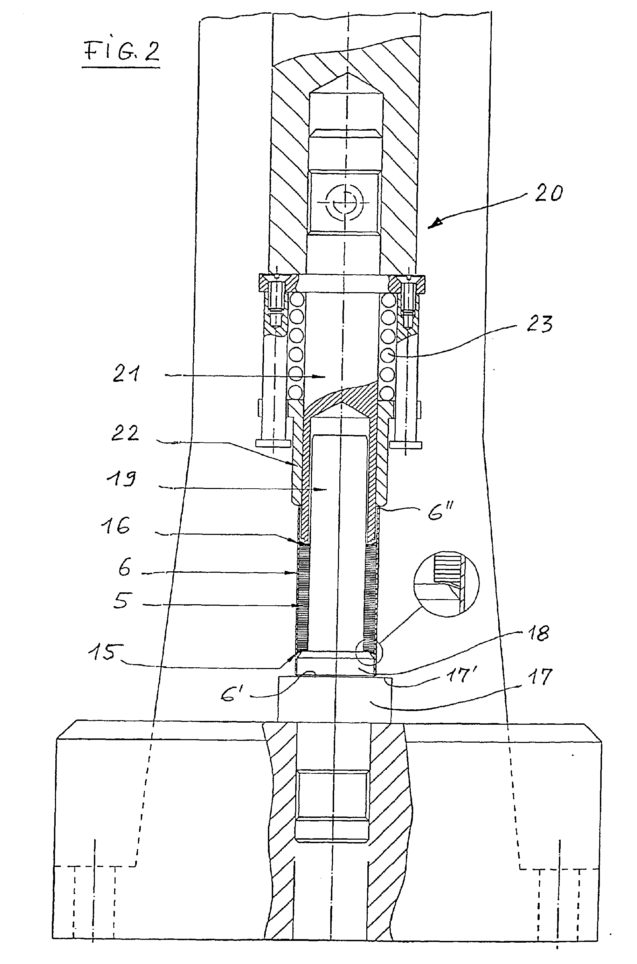

L'invention vise plus particulièrement l'assemblage de la partie statorique 4,6. Sur la Fig. 1, on voit notamment la présence, aux extrémités de l'empilement des tôles 5, de deux pièces annulaires 15, 16 dont la fonction sera décrite en rapport avec la Fig. 2.

La Fig. 2 représente un outil qui comporte un support de montage 17 avec une partie saillante 18, cette partie 18 étant agencée pour pouvoir être insérée dans la partie d'extrémité inférieure du tube 6. D'autre part, la partie saillante 18 présente avantageusement un prolongement de posage 19 qui permet le guidage des tôles 5 par leurs bords intérieurs.

La partie supérieure de l'outil de la Fig. 2 est formée par un dispositif de presse 20 comportant un organe poussoir 21 pour les tôles et un organe d'appui 22 à ressort 23, destiné à venir s'appuyer sur le bord avant 6' du tube 6. Le bord arrière 6'' de ce tube bute alors sur un épaulement 17' du support de montage.

Lors de l'assemblage, on pose une pièce d'appui annulaire 15 sur la partie 18 dont le bord est biseauté pour permettre la mise en place et une déformation de la pièce 15. Celle-ci est par exemple découpée, sous la forme d'un disque annulaire, dans une feuille d'acier ressort de faible épaisseur puis pliée sur son pourtour de manière à présenter une section incurvée ou coudée, le diamètre extérieur final de cette pièce étant légèrement plus grand que le diamètre intérieur du tube 6.

La pièce 15 est disposée sur la partie 18 de façon que son bord plié soit tourné vers le bas, et les tôles 5 sont posées sur la pièce 15. Le tube 6 est mis en place autour de l'ensemble des tôles 5 et une seconde pièce d'appui 16, analogue à la pièce 15, est disposée coaxialement avec son bord plié orienté vers le haut. Les côtés convexes des pièces 15 et 16 sont ainsi tournées vers l'empilement des tôles 5.

L'organe poussoir 21, de forme cylindrique creuse, est agencé pour venir s'engager dans le tube 6 et son bord inférieur présente un dégagement périphérique permettant une déformation de la pièce d'appui 16 lorsque celle-ci est en contact avec l'extrémité de l'organe 21.

Par l'actionnement du dispositif de presse 20, on abaisse le tube 6 au moyen de l'organe 22 jusqu'à ce qu'il bute sur l'épaulement 17' et l'on pousse les tôles 5 dans leur position définitive par rapport au tube 6 au moyen de l'organe poussoir 21. Les pièces d'appui se trouvent alors coincées par un effet d'arc-boutement contre la paroi intérieure du tube 6 aux deux extrémités de l'empilement de tôles et maintiennent celui-ci dans une position précise, bien définie notamment par rapport à l'extrémité arrière 6'' du tube 6.

L'ensemble statorique peut ainsi être réalisé essentiellement à partir d'un tube étiré, le tube 6, tronçonné à la longueur souhaitée, et de pièces découpées, à savoir les pièces 5, 15 et 16, seuls les flasques avant et arrière, 7 et 8, étant des pièces décolletées. Ceci représente non seulement une économie en soi, mais permet également la fabrication de moteurs de longueurs différentes avec le même outillage ou sans modification importante de cet outillage. Des moteurs du même type, mais de diamètre différent, peuvent bien entendu être fabriqués selon le même procédé.

En outre, l'assemblage décrit est particulièrement facile à réaliser, aucune précaution particulière n'étant requise pour le positionnement et la tenue en place des tôles à l'intérieur de la partie de manteau. Cette assemblage est aussi très fiable puisque les disques d'appui garantissent que la partie statorique en question ne puisse pas se désolidariser.

Il ressort de ce qui précède que le procédé selon l'invention et les moteurs fabriqués en appliquant ce procédé présentent des avantages techniques et économiques importants.

## Revendications

1. Procédé d'assemblage d'une partie statorique d'un moteur électrique rotatif, cette partie statorique comprenant une partie de manteau allongée (6) entourant un empilement (4) de pièces de tôle (5) magnétiquement perméables, de forme générale annulaire, disposées perpendiculairement au sens de la longueur de ladite partie de manteau, **caractérisé en ce que**
- l'on dispose une pièce d'appui (15) ayant la forme générale d'un disque annulaire sur une partie saillante (18) d'un support de montage (17), cette pièce d'appui étant agencée de façon à permettre de l'enfoncer dans une partie d'extrémité ouverte (avoisinant 6'') de la partie de manteau 6, mais à empêcher un déplacement de cette pièce dans le sens inverse,
- l'on place lesdites pièces de tôle (5) sous forme empilée sur ladite pièce d'appui (18),
- l'on dispose ladite partie de manteau (6) autour de cet empilement,
- l'on déplace la partie de manteau (6) et/ou ladite partie saillante (18) du support de montage, l'une par rapport à l'autre, de manière à enfoncer ladite pièce d'appui dans la partie de manteau, et
- l'on retire la partie statorique (6, 4) ainsi assemblée du support de montage.

2. Procédé d'assemblage selon la revendication 1, **caractérisé en ce que** ladite pièce d'appui (15) est une pièce en un matériau à ressort et possède des dimensions extérieures légèrement plus grandes que les dimensions intérieures correspondantes de la partie de manteau (6) dans laquelle elle sera introduite, de manière à ce que cette pièce d'appui se déforme lors de son enfoncement dans la partie de manteau et se coince contre une partie de paroi intérieure de celle-ci, la partie périphérique de ladite partie saillante (18) du support de montage étant agencée de façon à permettre ladite déformation.

3. Procédé d'assemblage selon la revendication 2, **caractérisé en ce que** ladite pièce d'appui (15) est préformée par pliage de sa partie périphérique de manière à présenter une section pliée ou incurvée, le côté convexe de cette section étant tourné vers l'empilement de tôles.

4. Procédé d'assemblage selon l'une des revendications 1, 2 ou 3, appliqué au cas d'une partie de manteau ayant deux parties d'extrémité ouvertes, opposées, **caractérisé en ce que**, avant de retirer ladite partie statorique (6,4),
- l'on enfonce une seconde partie d'appui (16) similaire à celle (15) disposée dans une première partie d'extrémité ouverte de la partie de manteau (6), par l'ouverture de la seconde partie d'extrémité de ladite partie de manteau, jusqu'à ce que cette pièce d'appui (16) vienne en contact avec l'empilement de tôles, bloquant celui-ci à l'intérieur de la partie de manteau.

5. Procédé d'assemblage selon la revendication 4, **caractérisé en ce que** l'on utilise un support de montage présentant un épaulement (17') au pied de ladite partie saillante (18), de façon à limiter le déplacement relatif de la partie de manteau (6) par rapport au support de montage à une longueur déterminée, et que l'on enfonce la seconde pièce d'appui (16) au moyen d'un organe poussoir (21), un organe d'appui (22) à ressort (23) fournissant un appui sur la seconde partie d'extrémité ouverte (avoisinant 6') de la partie de manteau (6).

6. Moteur électrique obtenu par l'utilisation du procédé d'assemblage selon la revendication 1, **caractérisé en ce que** sa partie de manteau (6) est constituée par un tube étiré de longueur déterminée.

## Claims

1. A process for the assembly of a stator part of a rotary electric motor, where this stator part includes an extended mantle part (6) surrounding a stack (4) of magnetically permeable sheet-metal parts (5), of generally annular shape, located perpendicularly to the length of the said mantle part, **characterised in that**:
- a pressure element (15) in the general shape of an annular disk is placed upon a projecting part (18) of an assembly base (17), this pressure element being arranged so as to allow it to be forced into an open end part (around 6") of the mantle part (6), but to prevent any movement of this part in the opposite direction,
- the said sheet-metal parts (5) in stacked form are placed onto the said pressure element (18),
- the said mantle part (6) is positioned around this stack,
- the mantle part (6) and/or the said projecting part (18) of the assembly base are moved in relation to each other so as to press the said pressure element into the mantle part, and
- the stator part (6, 4) thus assembled is removed from the assembly base.

2. An assembly process according to claim 1,
**characterised in that** the said pressure element (15) is made from a springy material, and has outside dimensions that are slightly larger than the corresponding inside dimensions of the mantle part (6) in which it will be inserted, in such a manner that this pressure element deforms as it is pressed into the mantle part and is trapped against an internal wall part of the latter, with the peripheral part of the said projecting part (18) of the assembly base being designed so as to allow the said deformation.

3. An assembly process according to claim 2, **characterised in that** the said pressure element (15) is preformed by the bending of its peripheral part so that it has a bent or curved section, the convex side of this section being oriented toward the stack of sheets.

4. An assembly process according to one of claims 1, 2 or 3, applied to the case of a mantle part with two opposite, open-ended parts **characterised in that**, before withdrawing the said stator part (6, 4),
- the a second pressure element (16) similar to that (15) placed in a first open end part of the mantle part (6), is forced in by opening the second end part of the said mantle part, until this pressure element (16) makes contact with the stacked sheets, blocking it inside the mantle part.

5. An assembly process according to claim 4, **characterised in that** use is made of an assembly base which has a shoulder (17') at the foot of the said projecting part (18), so as to limit the relative movement of the mantle part (6) in relation to the assembly base to a specified amount, and so as to press in the second pressure element (16) by means of a push device (21), a pressure element (22) with a spring (23), creating pressure on the second open-ended part (around 6') of the mantle part (6).

6. An electric motor created by using the assembly process according to claim 1, **characterised in that** its mantle part (6) is composed of a drawn tube of specified length.

## Patentansprüche

1. Verfahren zur Montage eines Statorteils eines rotierenden Elektromotors, wobei dieser Statorteil ein verlängertes Mantelteil (6) umfasst, das einen Stapel (4) von allgemein ringförmigen, magnetisch durchlässigen Blechstücken (5) umgibt, die senkrecht zur Längsrichtung des Mantelteils angeordnet sind, **dadurch gekennzeichnet, dass**
- ein Auflageteil (15), das die allgemeine Gestalt einer ringförmigen Scheibe besitzt, auf einem vorspringenden Abschnitt (18) eines Montagesockels (17) angeordnet wird, wobei dieses Auflageteil so eingerichtet ist, dass es sich in einen offenen Endabschnitt (in der Nähe von 6") des Mantelteils (6) eindrücken lässt, aber eine Bewegung dieses Teils in der umgekehrten Richtung verhindert wird,
- die Blechstücken (5) in gestapelter Form auf das Auflageteil (18) aufgesetzt werden,
- das Manteleil (6) um diesen Stapel herum angeordnet wird,
- das Mantelteil (6) und/oder der vorspringende Abschnitt (18) des Montagesockels so gegeneinander bewegt werden, dass das benannte Auflageteil in das Mantelteil eingedrückt wird, und
- der so montierte Statorteil (6, 4) vom Montagesockel abgenommen wird.

2. Montageverfahren nach Anspruch 1, **dadurch gekennzeichnet, dass** das Auflageteil (15) ein Teil aus Federwerkstoff ist und Aussenabmessungen besitzt, die geringfügig grösser als die entsprechenden Innenabmessungen des Mantelteils (6) sind, in das es eingesetzt wird, so dass sich dieses Auflageteil bei seinem Eindrücken in das Mantelteil verformt und an einem Abschnitt seiner Innenwand verkeilt wird, wobei der periphere Teil des vorspringenden Abschnitts (18) des Montagesockels so eingerichtet ist, dass er diese Verformung ermöglicht.

3. Montageverfahren nach Anspruch 2, **dadurch gekennzeichnet, dass** das Auflageteil (15) durch Umfalten seines peripheren Abschnitts so vorgeformt wird, dass es einen umgefalteten oder gekrümmten Querschnitt darbietet, wobei die konvexe Seite dieses Querschnitts zum Blechstapel hin weist.

4. Montageverfahren nach einem der Ansprüche 1, 2 oder 3, auf den Fall eines Mantelteils mit zwei einander gegenüberliegenden, offenen Endabschnitten angewendet und **dadurch gekennzeichnet, dass** vor der Wegnahme des Statorteils (6, 4)
- ein zweites Auflageteil (16), das dem (15) in einem ersten offenen Endabschnitt des Mantelteils (6) befindlichen ähnlich ist, durch die Öffnung des zweiten Endabschnitts des Mantelteils eingedrückt wird, bis dieses Auflageteil (16) mit dem Blechstapel in Berührung kommt und diesen im Inneren des Mantelteils einschliesst.

5. Montageverfahren nach Anspruch 4, **dadurch gekennzeichnet, dass** ein Montagesockel verwendet wird, der eine Schulter (17') am Fuss des vorspringenden Abschnitts (18) aufweist, um die Relativbewegung des Mantelteils (6) bezüglich des Montagesockels auf eine bestimmte Länge zu begrenzen, und dass das zweite Auflageteil (16) mit einem Druckorgan (21) eingedrückt wird, wobei ein Auflageorgan (22) mit Feder (23) einen Halt auf dem zweiten offenen Endabschnitt (nahe 6") des Mantelteils (6) liefert.

6. Elektromotor, unter Verwendung des Montageverfahrens gemäss Anspruch 1 erhalten und **dadurch gekennzeichnet, dass** sein Mantelteil (6) aus einem gezogenen Rohr einer bestimmten Länge besteht.
